# EUROPEAN PATENT SPECIFICATION

(11) **EP 1 263 661 B1**
(45) Date of publication and mention of the grant of the patent: **03.11.2004**
(21) Application number: 01909249.3
(22) Date of filing: 16.02.2001
(51) Int. Cl.: B65D 81/00

(54) **BEVERAGE FILTER CARTRIDGE**
FILTERKARTUSCHE FÜR GETRÄNKE
CARTOUCHE POUR FILTRE A BOISSON

(30) Priority: 18.02.2000 US 183708 P; 13.02.2001 US 782622
(43) Date of publication of application: 11.12.2002
(73) Proprietor: Keurig, Incorporated, Wakefield, MA 01880 (US)
(72) Inventor: SWEENEY, Richard, Winchester, MA 01890 (US); LAZARIS, Nicholas, G., Newton, MA 02468 (US); BEAULIEU, Roderick, H., Cumberland, RI 02864 (US); BUCUZZO, William, P., Haverhill, MA 01832 (US); LAI, Shih-Hao, Cambridge, MA 02141 (US)
(74) Representative: Ajello, Michael John
(86) International application number: PCT/US2001/004881
(87) International publication number: WO 2001/060712

(56) References cited:
- DE-A- 1 536 372
- US-A- 5 840 189

## Description

This invention relates to disposable single serve beverage filter cartridges.

A known disposable single serve beverage filter cartridge is disclosed in U.S. Patent Nos. 5,325,765 and 5,840,189 (Sylvan et al.), dated respectively July 5, 1994 and November 24, 1998.

This beverage filter cartridge is comprised basically of a preferably impermeable yieldably-piercable cup-shaped outer container internally subdivided by a permeable cone-shaped filter into first and second chambers. A granular or powdered dry beverage medium, e.g., roasted ground coffee, is stored in the first chamber, and the container is closed by an impermeable yieldably piercable lid.

During a processing cycle, the lid and container bottom are pierced, respectively, by tubular inlet and outlet probes. The inlet probe admits heated liquid under pressure into the first chamber for infusion with the beverage medium, and the resulting brewed beverage passes through the filter into the second chamber from which it exits via the outlet probe for delivery to an underlying cup.

This known beverage filter cartridge has gained rapid and increasingly widespread acceptance, notwithstanding several problems that have persisted since its initial introduction. One such problem stems from a tendency of the container side wall to buckle under the force exerted by the outlet probe as it pierces the container bottom. This sometimes results in a failure of the outlet probe to achieve bottom penetration, thus aborting the brewing process because the brewed beverage cannot be delivered to the underlying cup. Buckling of the container side wall also can distort the punctured orifice in the container bottom, thus compromising sealing and resulting in leakage of the brewed beverage

Problems have also been encountered in reliably sealing the rim of the filter component to the interior side wall of the container, as well as in centrally securing the bottom of the filter component to the container bottom. Failure to achieve a proper rim seal can cause the unsealed portion of the filter to collapse under brew pressure, resulting in the brewed beverage being contaminated by beverage medium residue escaping from the collapsed filter. By the same token, contamination of the brewed beverage also can occur if the filter bottom is not centrally secured, resulting in the filter being punctured by the outlet probe as it projects upwardly through the container bottom. Contamination of the brewed beverage also occurs occasionally when a filter element bursts under the pressure exerted by the heated liquid being infused with the beverage medium.

Still another problem stems from heat sealing the upper rim of the filter at or closely adjacent to the upper rim of the container side wall as disclosed in US 5,840,189. This increases the unoccupied so-called "head space" between the outside of the filter and the surrounding container wall, and also limits the maximum amount of beverage medium that can be stored in the cartridge to that which can be contained within the filter. In some cases, this can compromise the strength of the resulting brewed beverage. Beverage strength can be optimised by filling the filter to its maximum capacity, but this can result in errant granules of the beverage medium spilling onto the container rim. This in turn can disrupt the integrity of the seal between the cover and the container rim.

Among the objectives of the present invention is a strengthening of the container side wall to thereby resist buckling when the container bottom is punctured by the outlet probe of the brewer.

Companion objectives include a beneficial increase in beverage medium storage capacity, improvements in the manner in which the filter component is sealed to and radially supported by the container side wall, as well as improvements in the manner in which the lower end of the filter is positioned and anchored to the cartridge bottom.

In accordance with the present invention, there is provided a beverage filter cartridge comprising a cup-shaped outer container having a bottom wall and a side wall extending upwardly from said bottom wall to a circular rim surrounding an upper opening, a generally cone-shaped filter element having a closed lower end supported on and secured to said bottom wall, and having an upwardly diverging wall with an open upper end, said filter element being configured and positioned to subdivide the interior of said container into first and second chambers, a beverage medium stored in said first chamber, and a lid joined to said side wall at said rim, said lid being yieldably piercable to accommodate an injection of liquid into said first chamber for combination with said beverage medium to produce a beverage, said filter element being permeable to accommodate a flow of said beverage into said second chamber, and said bottom wall being yieldably piercable to accommodate an outflow of said beverage from said second chamber to the exterior of said cartridge; characterised in that said side wall has an upper section extending downwardly from said rim to an intermediate section defined by an inwardly tapered ledge, and a tapered lower section extending downwardly from said ledge to said bottom wall, with said filter element being joined to said inwardly tapered ledge.

These and other features, objectives and advantages of the present invention will now be described in greater detail, by way of example, with reference to the accompanying drawings, wherein:
Figure 1 is a perspective view of a disposable beverage filter cartridge in accordance with one embodiment of the present invention;
Figure 2 is an exploded perspective view of the basic components of the beverage filter cartridge shown in Figure 1;
Figure 3 is a side elevational view of the beverage filter cartridge shown in Figure 1;
Figures 4 and 5 are vertical and horizontal sectional views taken, respectively, on lines 4-4 and 5-5 of Figure 3;
Figure 6 is an enlarged sectional view of a rim portion of the filter cartridge as shown in Figure 4;
Figure 7 is an enlarged view of a portion of the side wall of the beverage cartridge;
Figure 8 is a sectional view taken along line 8-8 of Figure 7;
Figure 9 is a bottom perspective view of a disposable filter cartridge in accordance with a second embodiment of the present invention;
Figure 10 is a side elevational view of the filter cartridge shown in Figure 9;
Figure 11 is a bottom view of the filter cartridge shown in Figures 9 and 10;
Figure 12 is an enlarged cross sectional view taken along line 12-12 of Figure 10;
Figure 13 is a perspective view of a disposable beverage filter cartridge in accordance with a third embodiment of the present invention;
Figure 14 is an exploded perspective view of the components of the beverage filter cartridge shown in Figure 13;
Figure 15 is a side elevational view looking in the direction depicted by the arrow "x" in Figure 13;
Figure 16 is another side elevational view looking in the direction depicted by the arrow "Y" in Figure 13;
Figure 17 is an enlarged bottom view of the beverage filter cartridge shown in Figures 13-16;
Figure 18 is an enlarged vertical sectional view taken along line 18-18 of Figure 16;
Figure 19 is a vertical sectional view taken along line 19-19 of Figure 18;
Figure 20 is a horizontal sectional view taken along line 20-20 of Figure 19; and
Figure 21 is an enlarged sectional view of a rim portion of the cartridge as shown in Figures 18 and 19.

### DETAILED DESCRIPTION OF PREFERRED EMBODIMENT

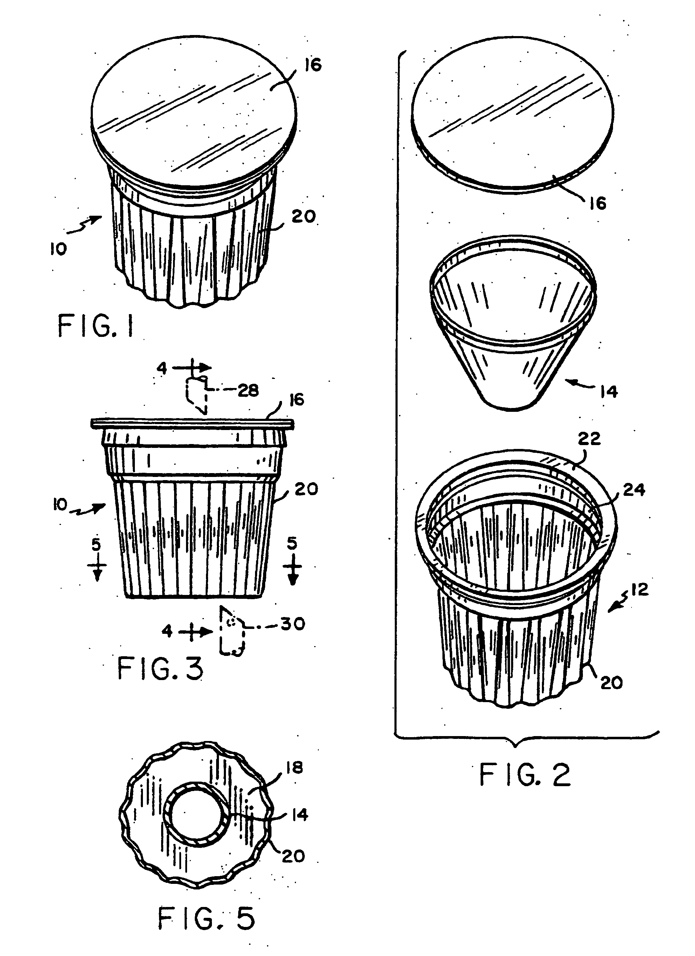

With reference initially to Figures 1-5, a beverage filter cartridge in accordance with a first embodiment of the invention is generally depicted at 10. As shown in Figure 2, the basic components of the beverage filter cartridge include an outer cup-shaped container 12, a generally cone-shaped filter element 14, and a planar circular lid 16.

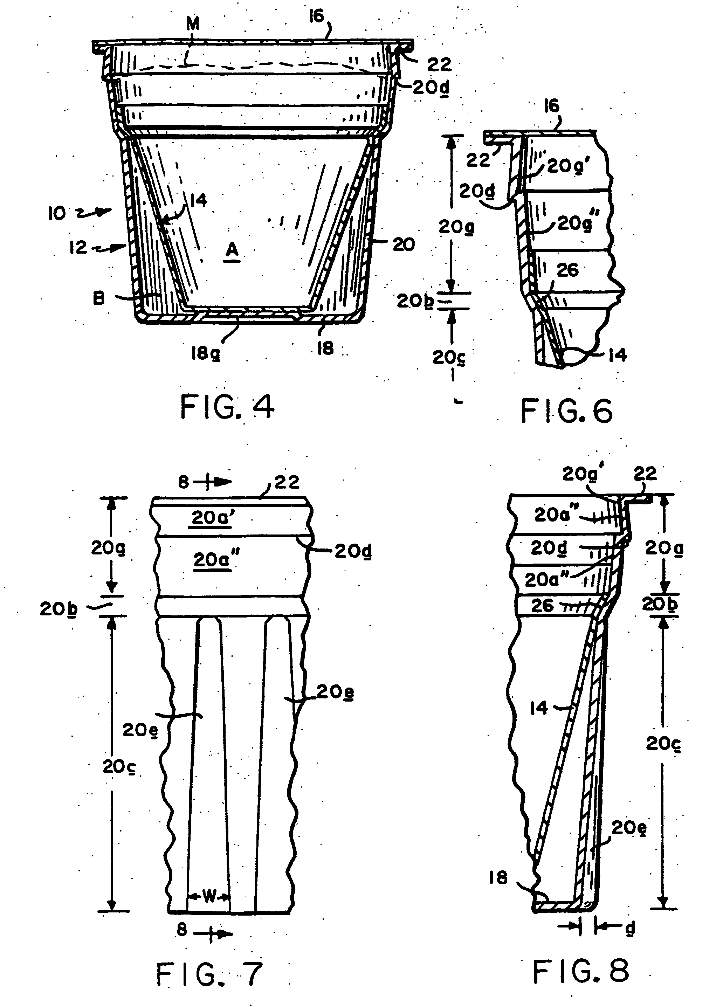

The cup-shaped container 12 has a bottom 18, and a side wall 20 extending upwardly from the bottom to a circular rim 22 surrounding an upper opening 24. With reference additionally to Figures 6-8, it will be seen that the side wall 20 has an upper section 20a extending downwardly from the rim 22 to an intermediate section defined by an inwardly tapered ledge 20b, and a lower tapered section 20c extending downwardly from ledge 20b to the bottom 18.

The upper wall section 20a is preferably subdivided into upper and lower segments 20a' and 20a". Moving down the cup, segment 20a' is flared outwardly, and segment 20a" tapers inwardly, with the juncture therebetween defining a stacking shoulder 20d. The bottom 18 is optionally and preferably provided with an upwardly protruding central boss 18a.

The lower tapered wall section 20c is configured to provide a plurality of circumferentially spaced flutes 20e, the upper ends of which terminate beneath the intermediate section defined by ledge 20b, and the lower ends of which terminate as indentations in the bottom wall 18.

It will be seen from Figure 8 that the depths "d" of the flutes 20e gradually increase from a minimum at their upper ends to a maximum at their lower ends. Likewise, as can be seen from Figure 7, the widths "w" of the flutes also gradually increase from a minimum at their upper ends to a maximum at their lower ends.

The cup-shaped container is preferably thermo-formed vacuum molded from an impermeable yieldably piercable heat sealable material having a nominal thickness of 0.031" and comprising, for example, polyethylene/EVOH/polystyrene supplied by Curwood Packaging of Oshkosh, Wisconsin, U.S.A.

The filter element 14 is formed of a pliable and permeable heat sealable material such as for example cellulose polypropylene supplied by J. R. Crompton, Ltd of Bury, Lancashire, England. The bottom of the filter element is supported on and secured as by heat sealing to the central boss 18a.

The lid may be cut or blanked from any suitable impermeable heat sealable and yieldably piercable material, such as for example, a metallic/polymer laminate supplied by Winpak Heat Seal Packaging, Inc. of Montreal, Canada.

As can best be seen in Figure 6, the filter element is heat sealed as at 26 to the intermediate wall section defined by tapered ledge 20b. The taper angle of the ledge 20b closely approximates the taper angle of the filter element 14, thereby facilitating the task of securely and reliably heat sealing the two together. The filter element serves to subdivide the interior of the container 12 into first and second chambers A, B. A dry granular or powdered beverage medium "M", typically ground roasted coffee, is stored in chamber A, and the container opening 24 is closed by heat sealing the lid 16 to the rim 22.

At the onset of a processing cycle, the lid 16 and container bottom 18 are pierced, respectively, by tubular inlet and outlet probes 28, 30 (see Figure 3). The inlet probe 28 admits a heated liquid, typically hot water, into chamber A where it infuses and combines with the beverage medium M to produce a beverage. The beverage passes through the filter element 14 into chamber B, from which it exits via outlet probe 30.

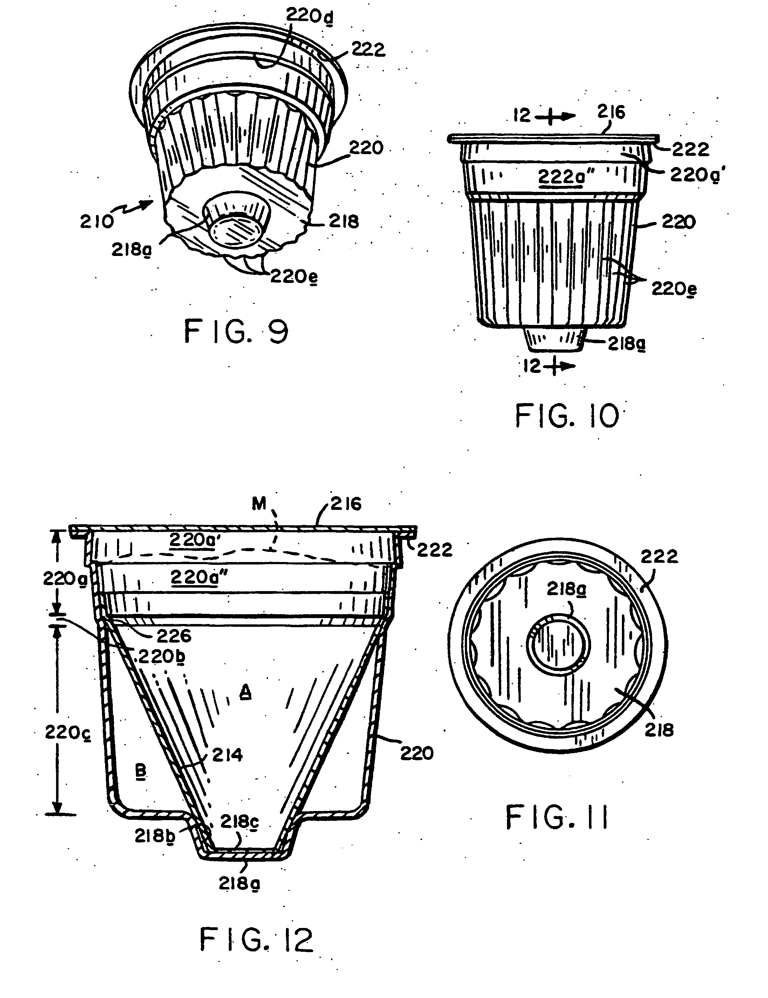

The second embodiment illustrated in Figures 9-11 is similar in many respects to the above-described first embodiment. Similar features of the second embodiment have been identified with similar reference numerals in a two hundred series. Thus, for example, reference numeral 10 identifies the filter cartridge of the first embodiment, and reference numeral 210 identifies the filter cartridge of the second embodiment.

In the second embodiment, the container bottom 218 is configured to provide a downwardly protruding centrally disposed reduced diameter boss 218a defining an interior sump 218b surrounded by an annular substantially planar bottom area. The bottom of the conical filter element is received in and secured to the bottom of the sump as at 218c.

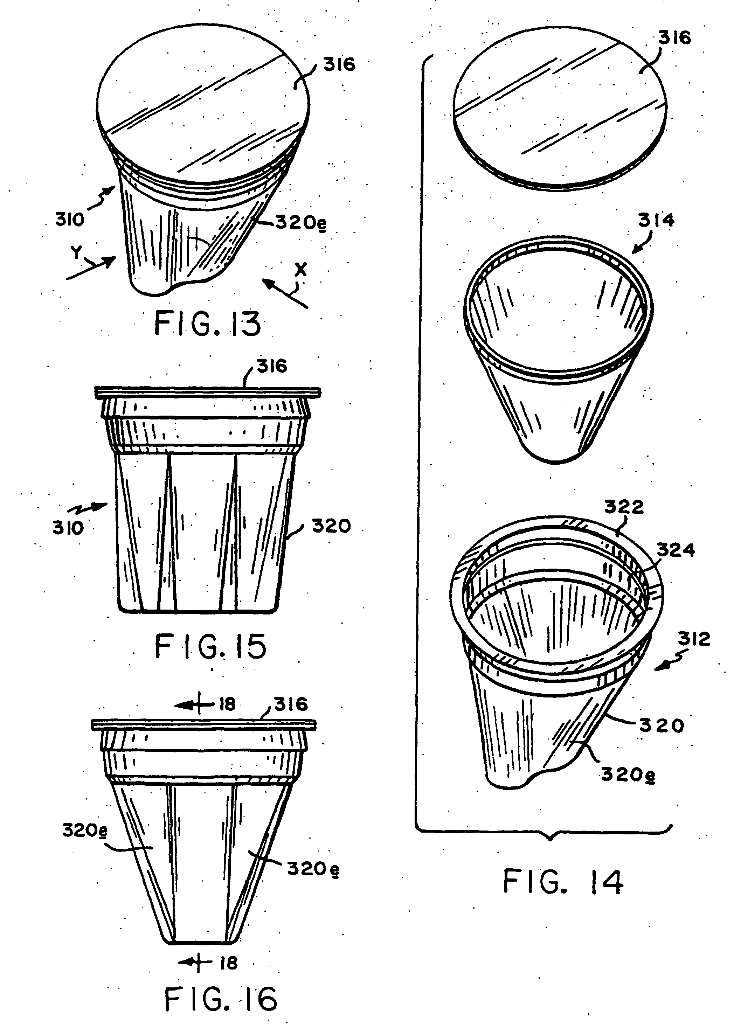

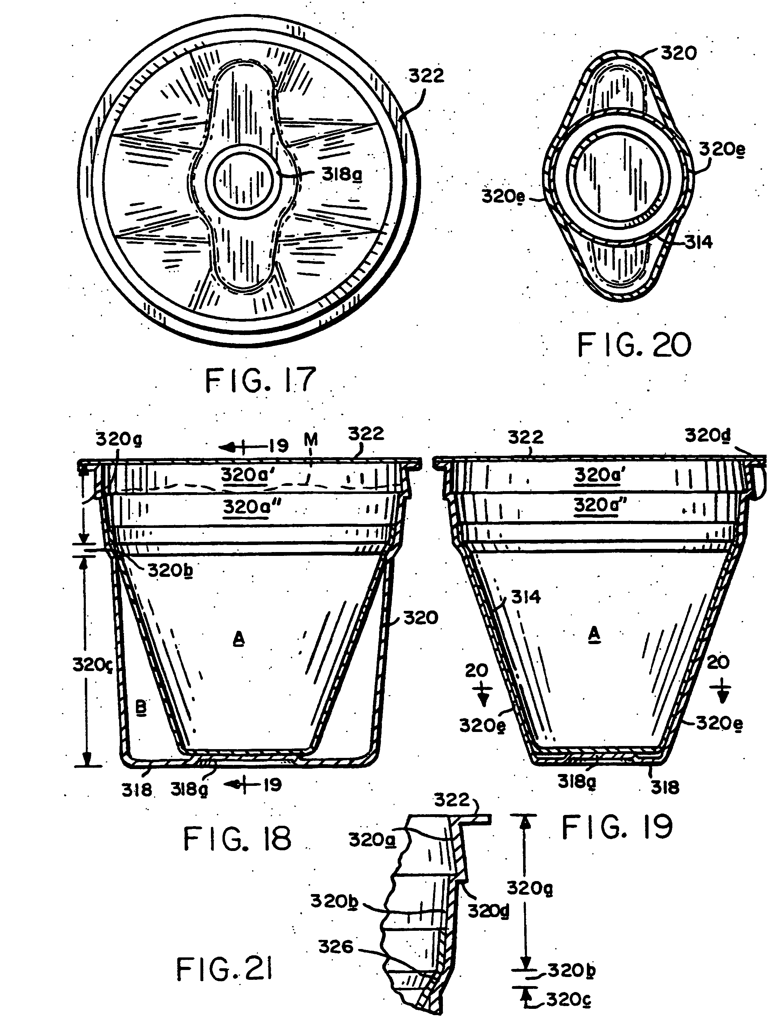

The third embodiment illustrated in Figures 13-21 is also similar in many respects to the first embodiment. Again, similar features have been identified with similar reference numerals, but in a three hundred series.

The major difference between the first and third embodiments is that the latter has fewer and much deeper flutes 320e. As can be best seen in Figure 19, the deeper flutes 320e contact and provide radial support for the filter element 314.

In light of the foregoing, it will now be appreciated by those skilled in the art that the present invention offers significant advantages over the known beverage filter cartridge described in the previously referenced patents. For example, the circumferentially spaced flutes 20e, 220e and 320e strengthen the container side wall against buckling when the bottom is pierced by the outlet probe 30. The deeper flutes 320e of the third embodiment offer the added advantage of radially supporting the filter element, which can be particularly beneficial during the processing cycle, when the filter element is being stressed by the infusion of pressurized heated liquid into the beverage medium.

In all embodiments, the downwardly diverging and gradually deepening of the flutes serves to promote downward flow of the brewed beverage in chamber B while beneficially encouraging turbulence. The upwardly protruding bosses 18a, 318a on the container bottoms of the first and third embodiments provide readily accessible support platforms for the bottoms of the filter elements. Securing the bottoms of the filter elements to the bosses 18a, 218a insures that the filter elements will not be punctured by the outlet probe 30.

The small diameter sump 218b defined by the downwardly protruding boss 218a of the second embodiment receives the lower end of the filter component in a confined space which beneficially decreases head space and further assists in positively locating and safeguarding the filter from damaging contact with the outlet probe.

The tapered ledges 20b, 220b, 320b of all embodiments provide distinct and readily accessible lands to which the filter elements may be reliably joined by heat sealing. The upper ends of the flutes 20e, 220e, 320e terminate below the ledges 20b, 220b, 320b, thereby insuring that the ledges are not interrupted by discontinuities that would be detrimental to the critical seal of the filter elements to the container side walls.

The upper container sections 20a, 220a, 320a above the filters provide beneficial increases in available storage capacity for the beverage medium. This increased storage capacity makes it unnecessary to fill the interior chamber A to its maximum capacity, thereby safeguarding the container rim from contamination by errant granules of the beverage medium.

Although the outer container and cover have been described as being formed from impermeable materials, it will be understood by those skilled in the art that, alternatively, permeable materials may be employed for one or both of these components. Where permeable materials are employed, the completed cartridges will preferably be subsequently enclosed, either individually or in batches, with impermeable wrappings. Materials for such wrappings are well known, and include for example EVOH films, aluminum foil, etc.

Although the present invention has been described with reference to several embodiments, various changes, modifications and additions may be made without departing from the spirit and scope of the appended claims.

## Claims

1. A beverage filter cartridge (10) comprising a cup-shaped outer container (12) having a bottom wall (18) and a side wall (20) extending upwardly from said bottom wall to a circular rim (22) surrounding an upper opening (24), a generally cone-shaped filter element (14) having a closed lower end supported on and secured to said bottom wall, and having an upwardly diverging wall with an open upper end, said filter element being configured and positioned to subdivide the interior of said container into first and second chambers (A, B), a beverage medium (M) stored in said first chamber, and a lid (16) joined to said side wall (20) at said rim (22), said lid being yieldably piercable to accommodate an injection of liquid into said first chamber for combination with said beverage medium to produce a beverage, said filter element being permeable to accommodate a flow of said beverage into said second chamber, and said bottom wall being yieldably piercable to accommodate an outflow of said beverage from said second chamber to the exterior of said cartridge; **characterised in that** said side wall (20) has an upper section (20a) extending downwardly from said rim (22) to an intermediate section defined by an inwardly tapered ledge (20b), and a tapered lower section (20c) extending downwardly from said ledge to said bottom wall (18), with said filter element being joined to said inwardly tapered ledge.

2. A beverage filter cartridge according to Claim 1, wherein the open upper end of the filter element (14) is joined to said inwardly tapered ledge (20b).

3. A beverage filter cartridge according to Claim 1 or Claim 2, wherein said ledge (20b) tapers inwardly from said upper section (20a) to said lower section (20c), and wherein the taper angle of said ledge is greater than the taper angle of said lower section.

4. A beverage filter cartridge according to any preceding claim, wherein said upper section (20a) has an upper segment (20a') extending downwardly from said circular rim (22) and a lower segment (20a") extending upwardly from said ledge (20b), said upper segment being flared outwardly and said lower segment being tapered inwardly, with the juncture of said upper and lower segments defining an exterior stacking shoulder (20d).

5. A beverage filter cartridge according to Claim 3, wherein the taper angle of said ledge (20b) approximates to the taper angle of said filter element.

## Patentansprüche

1. Getränkefilterkartusche (10) mit einem becherförmigen äußeren Behälter (12), der eine Bodenwand (18) hat und eine Seitenwand (20), die sich von der Bodenwand aufwärts zu einem kreisförmigen Rand (22) erstreckt, der eine obere Öffnung (24) umgibt, mit einem insgesamt kegelförmigen Filterelement (14), das ein geschlossenes unteres Ende hat, welches auf der Bodenwand abgestützt und an derselben befestigt ist, und eine aufwärts divergierende Wand mit einem offenen oberen Ende, wobei das Filterelement so konfiguriert und angeordnet ist, dass es das Innere des Behälters in eine erste und eine zweite Kammer (A, B) unterteilt, mit einem Getränkemedium (M), das in der ersten Kammer gespeichert ist, und mit einem Deckel (16), der mit der Seitenwand (20) an dem Rand (22) verbunden ist, wobei der Deckel nachgiebig durchbohrbar ist, um ein Einspritzen von Flüssigkeit in die erste Kammer zur Kombination mit dem Getränkemedium zum Erzeugen eines Getränks zu gestatten, wobei das Filterelement durchlässig ist, um einen Strom des Getränks in die zweite Kammer zu gestatten, und wobei die Bodenwand nachgiebig durchbohrbar ist, um ein Ausströmen des Getränks aus der zweiten Kammer aus der Kartusche nach außen zu gestatten; **dadurch gekennzeichnet, dass** die Seitenwand (20) einen oberen Abschnitt (20a) hat, der sich von dem Rand (22) abwärts zu einem Zwischenabschnitt erstreckt, welcher durch einen einwärts konisch zulaufenden Sims (20b) gebildet ist, und einen konisch zulaufenden unteren Abschnitt (20c), der sich von dem Sims abwärts zu der Bodenwand (18) erstreckt, wobei das Filterelement mit dem einwärts konisch zulaufenden Sims verbunden ist.

2. Getränkefilterkartusche nach Anspruch 1, wobei das offene obere Ende des Filterelements (14) mit dem einwärts konisch zulaufenden Sims (20b) verbunden ist.

3. Getränkefilterkartusche nach Anspruch 1 oder Anspruch 2, wobei der Sims (20b) von dem oberen Abschnitt (20a) zu dem unteren Abschnitt (20c) einwärts konisch zuläuft und wobei der Konuswinkel des Simses größer ist als der Konuswinkel des unteren Abschnitts.

4. Getränkefilterkartusche nach einem der vorhergehenden Ansprüche, wobei der obere Abschnitt (20a) ein oberes Segment (20a') hat, das sich von dem kreisförmigen Rand (22) abwärts erstreckt, und ein unteres Segment (20a"), das sich von dem Sims (20b) aufwärts erstreckt, wobei sich das obere Segment auswärts konisch erweitert und wobei das untere Segment einwärts konisch zuläuft, wobei die Verbindungsstelle des oberen und des unteren Segments eine äußere Stapelschulter (20d) bildet.

5. Getränkefilterkartusche nach Anspruch 3, wobei der Konuswinkel des Simses (20b) dem Konuswinkel des Filterelements angenähert ist.

## Revendications

1. Cartouche de filtre à boisson (10) comprenant un récipient extérieur (12) en forme de godet ayant une paroi de fond (18) et une paroi latérale (20) s'étendant vers le haut à partir de la paroi de fond vers un bord circulaire (22) entourant une ouverture supérieure (24), un élément de filtre généralement de forme conique (14) ayant une extrémité inférieure fermée supportée sur et fixée à ladite paroi de fond, et ayant une paroi évasée vers le haut avec une extrémité supérieure ouverte, ledit élément de filtre étant configuré et positionné pour subdiviser l'intérieur dudit récipient en une première et une seconde chambre(A, B), un liquide de boisson (M) stocké dans la première chambre, et un couvercle (16) connecté à ladite paroi latérale (20) au niveau dudit bord (22), ledit couvercle étant perçable de manière résiliente pour recevoir une injection de liquide dans ladite première chambre pour se combiner avec ledit liquide de boisson pour produire une boisson, ledit élément de filtre étant perméable pour permettre un écoulement de ladite boisson dans ladite seconde chambre, et ladite paroi de fond étant perçable de manière résiliente pour permettre un écoulement de ladite boisson à partir de ladite seconde chambre vers l'extérieur de ladite cartouche ; **caractérisé en ce que** ladite paroi latérale (20) comprend une section supérieure (20a) s'étendant vers le bas à partir dudit bord (22) vers une section intermédiaire définie par un décrochement évasé vers l'intérieur (20b) et une section inférieure conique (20c) s'étendant vers le bas à partir dudit décrochement vers ladite paroi de fond (18), avec ledit élément de filtre connecté audit décrochement évasé vers l'intérieur.

2. Cartouche de filtre à boisson selon la revendication 1, dans laquelle l'extrémité supérieure ouverte de l'élément de filtre (14) est connectée audit décrochement évasé vers l'intérieur (20b).

3. Cartouche de filtre à boisson selon la revendication 1 ou la revendication 2, dans laquelle ledit décrochement (20b) s'évase vers l'intérieur à partir de ladite section supérieure (20a) vers ladite section inférieure (20c), et dans laquelle l'angle d'évasement dudit décrochement est supérieur à l'angle d'évasement de ladite section inférieure.

4. Cartouche de filtre à boisson selon l'une quelconque des revendications précédentes, dans laquelle ladite section supérieure (20a) comprend un segment supérieur (20a') s'étendant vers le bas à partir dudit bord circulaire (22) et un segment inférieur (20a") s'étendant vers le haut à partir dudit décrochement (20b), ledit segment supérieur s'évasant vers l'extérieur et ledit segment inférieur s'évasant vers l'intérieur, avec la jonction desdits segments supérieurs et inférieurs définissant un épaulement d'empilage extérieur (20d).

5. Cartouche de filtre à boisson selon la revendication 3, dans laquelle l'angle d'évasement dudit décrochement (20b) est approximativement celui dudit élément de filtre.
